# EUROPEAN PATENT SPECIFICATION

(11) **EP 3 387 725 B1**
(45) Date of publication and mention of the grant of the patent: **29.06.2022**
(21) Application number: 15807668.7
(22) Date of filing: 09.12.2015
(51) Int. Cl.: H02J 3/38

(54) **CONTROL OF A MICROGRID**
STEUERUNG EINES MIKRONETZES
COMMANDE D'UN MICRO-RÉSEAU ÉLECTRIQUE

(43) Date of publication of application: 17.10.2018
(73) Proprietor: Hitachi Energy Switzerland AG, 5400 Baden (CH)
(72) Inventor: MAJUMDER, Ritwik, 723 44 Västerås (SE); MARINOPOULOS, Antonis, 1825AE Alkmaar (NL)
(74) Representative: AWA Sweden AB
(86) International application number: PCT/EP2015/079135
(87) International publication number: WO 2017/097354

(56) References cited:
- WO-A1-2015/131958
- AZEVEDO GUSTAVO M S ET AL: "A control of microgrid power converter with smooth transient response during the change of connection mode", 2013 BRAZILIAN POWER ELECTRONICS CONFERENCE, IEEE, 27 October 2013 (2013-10-27), pages 1008-1015, XP032585657, ISSN: 2175-8603, DOI: 10.1109/COBEP.2013.6785238 [retrieved on 2014-04-09]
- JONG-YUL KIM ET AL: "Coordinated state-of-charge control strategy for microgrid during islanded operation", POWER ELECTRONICS FOR DISTRIBUTED GENERATION SYSTEMS (PEDG), 2012 3RD IEEE INTERNATIONAL SYMPOSIUM ON, IEEE, 25 June 2012 (2012-06-25), pages 133-139, XP032226551, DOI: 10.1109/PEDG.2012.6253991 ISBN: 978-1-4673-2021-4
- JOAN ROCABERT ET AL: "Control of Power Converters in AC Microgrids", IEEE TRANSACTIONS ON POWER ELECTRONICS, INSTITUTE OF ELECTRICAL AND ELECTRONICS ENGINEERS, USA, vol. 27, no. 11, 1 November 2012 (2012-11-01), pages 4734-4749, XP011449316, ISSN: 0885-8993, DOI: 10.1109/TPEL.2012.2199334
- KHONGKHACHAT S ET AL: "Droop control strategy of AC microgrid in islanding mode", 2015 18TH INTERNATIONAL CONFERENCE ON ELECTRICAL MACHINES AND SYSTEMS (ICEMS), IEEE, 25 October 2015 (2015-10-25), pages 2093-2098, XP032851806, DOI: 10.1109/ICEMS.2015.7385385 [retrieved on 2016-01-18]

## Description

### TECHNICAL FIELD

The present disclosure relates to methods and devices for controlling a microgrid comprising a plurality of distributed generators (DG) which are connected in said microgrid.

### BACKGROUND

A microgrid is a localized grouping of electricity generation, energy storage, and loads that normally operates connected to a traditional centralized grid (macrogrid) via a point of common coupling (PCC). This single point of common coupling with the macrogrid can be disconnected, islanding the microgrid. Microgrids are part of a structure aiming at producing electrical power locally from many small energy sources, DGs. In a microgrid, a DG is often connected via a converter which controls the output of the DG, i.e. the power injected into the microgrid.

A microgrid (in grid connected mode, i.e. connected to the macrogrid) supplies the optimized or maximum power outputs from the connected DG sites and the rest of the power is supplied by the macrogrid. The microgrid is connected to the macrogrid at a PCC through a controllable switch. This grid connection can be lost during faults and then the microgrid is islanded.

An example of prior art is disclosed in "A control of microgrid power converter with smooth transient response during the change of connection mode" by Azevedo Gustavo M S et al.

During islanding, there is a risk of power imbalance in the microgrid due to the loss of power import from the macrogrid as well as loss of voltage and/or frequency control by said macrogrid. For voltage control it is required to change control mode for some of the DGs, from power control in grid following mode to voltage and frequency control in grid forming mode. The power balancing is solved by fast storage action and immediate load shedding schemes.

The change in control mode of the DGs from current control to voltage control operation is initiated to create the voltage and frequency reference for the microgrid without presence of the macrogrid.

This switchover from one mode to another is initiated by island detection and thus the set point tracking of the converters depend on the island detection time, mode change signal and settling time of the primary control loop.

As mentioned above, during islanding, loads, and occasionally DGs, may need to be tuned off, e.g. disconnected from the microgrid, in order for some of the remaining DGs to focus on voltage and frequency control, resulting in operation disruption or system transients in the microgrid.

### SUMMARY

It is an objective of the present invention to improve control of a microgrid during islanding to reduce the disruption, e.g. system transients, thereof. According to an aspect of the present invention, there is provided a method of controlling a microgrid arrangement according to claim 1.

According to another aspect of the present invention, there is provided a computer program product according to claim 7.

Preferred embodiments are defined in the dependent claims.

A control aspect during islanding is the grid formation by the microgrid DGs. The change of control modes in some of the DGs is required for grid formation. Often diesel generators are applied for this purpose. However, some of the DGs, e.g. comprising an energy storage, may also change their control mode to participate in the grid formation. With a higher number of grid forming sources, microgrid stability may be improved and reliability increased, in case of e.g. islanding. A problem however is that the power output of the grid forming DGs changes based on power balance and power sharing gains e.g. droop. In some scenarios, it may not be possible to increase the power output of microgrid DGs, such as energy storages, depending on the available power. Thus, in accordance with the present invention, it may be advantageous with grid forming participation of microgrid DGs without change in power output, i.e. by means of the grid forming support mode in accordance with the present invention.

According to another aspect of the present invention, there is provided a microgrid arrangement according to claim 8.

In accordance with the present invention, at least one second DG, e.g. a diesel generator or large energy storage, is conventionally used to form the microgrid, i.e. control the voltage and frequency in the microgrid, during and after the instability, e.g. islanding of the microgrid has been detected. However, in addition, to improve the control/stability of the microgrid after the detection of the instability, at least one first DG is switched to a grid forming mode which is herein called a grid forming support mode, in which the first DG aids the second DG in controlling the voltage and frequency of the microgrid when needed, i.e. during a transient state (typically during a duration directly following the detection of the instability and switching to the grid forming support mode) until the microgrid has stabilized enough for the second DG to be able to hold the microgrid within acceptable voltage and frequency deviations without the help of the first DG. Then, the first DG can go back to power control, i.e. control based on a power reference (typically active and reactive power references). It is noted that the first and second voltage references may be the same (since they are for controlling the voltage in the same microgrid) and that the first and second voltage references typically include reference for voltage magnitude as well as frequency reference for the voltage, e.g. has the form of a sinewave.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an embodiment of a microgrid arrangement of the present invention.
Fig 2a is a schematic block diagram of an embodiment of a control arrangement in accordance with the present invention.
Fig 2b is a schematic block diagram of an embodiment of a control arrangement in accordance with the present invention.
Fig 3 illustrates operation of a DG in the different control modes.
Fig 4 is a schematic flow chart of an embodiment of the method of the present invention.
Fig 5 is a schematic block diagram of an example embodiment of a simulated microgrid arrangement of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

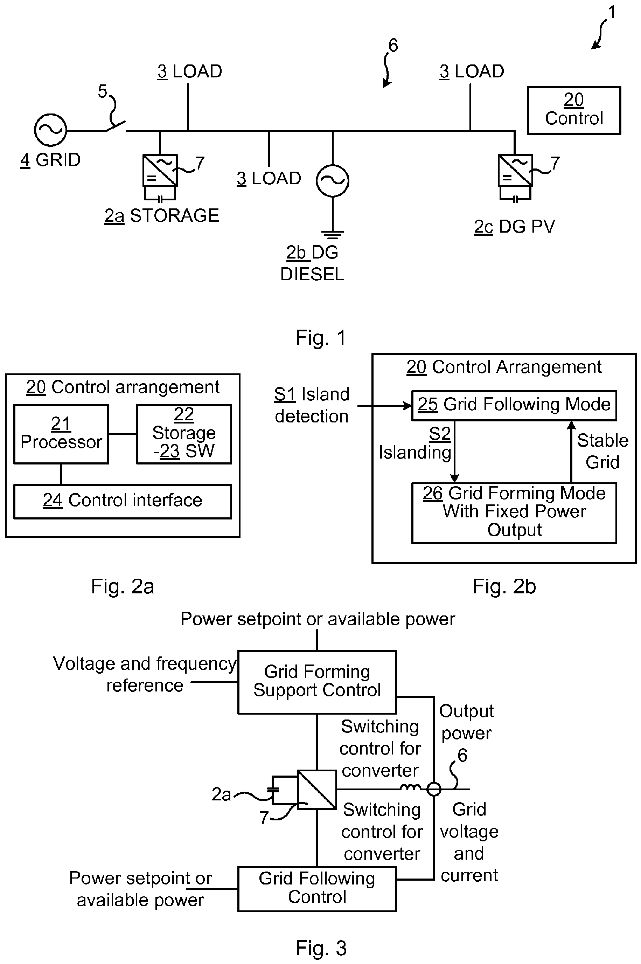

Figure 1 illustrates an embodiment of a microgrid arrangement 1 of the present disclosure. The microgrid arrangement 1 comprises a microgrid 6, connecting a plurality of DGs 2 and loads 3. In the figure, three different DGs are shown as an example, an energy storage 2a e.g. comprising a battery or flywheel or the like as part of an Energy Storage System (ESS) such as a Battery ESS (BESS), a Diesel generator 2b, and a photovoltaic (PV) power generator 2c. Some DGs, such as the energy storage 2a and the PV generator 2c produce direct current (DC) while, since the microgrid carries alternating current (AC), they are each connected to the microgrid 6 via DC to AC converter 7. The microgrid 6 is connected to a power grid 4 (e.g. a macrogrid such as a power distribution grid) via a switch 5 e.g. a circuit breaker. When the switch 5 is in a closed position, the microgrid is connected to the power grid, but when the switch 5 is in an open position, the microgrid is islanded i.e. disconnected from the power grid. The microgrid arrangement 1 also comprises a control arrangement 20 (see also figures 2a and 2b) for controlling the operation of the microgrid arrangement, especially the outputs of the DGs 2 therein. The control arrangement may be a central control, or be distributed such as co-located with the different DGs 2. The control arrangement or at least a part thereof may be located away from the microgrid 6 e.g. in a control room.

In accordance with the present invention, during islanding one or more of the DGs 2 switch from grid following mode to grid forming support mode keeping the same power output at steady state. Once the grid stability is achieved the DGs may switch back to grid following mode. The concept can be applied to any DG 2, such as the energy storage 2a or other distributed generator 2b or 2c based on their interfacing converter 7 controllability to participate in grid formation. In addition, e.g. the diesel generator 2b or a larger energy storage forms the grid in regular grid forming mode when islanded.

Figure 2a schematically illustrates operation of the control arrangement 20 controlling the DGs 2. The control arrangement switches the control mode of at least one first and second DG, some or all of the DGs in the microgrid arrangement 1 depending on whether the control arrangement has, by means of measurements of e.g. voltage and/or current in different places in the microgrid 6, detected an instability in the microgrid. The instability may e.g. be that the microgrid has been islanded due to the switch 5 being in its opened position. Thus, when an instability (e.g. islanding) has been detected Si, the control arrangement switches a first DG from grid following mode 25 to grid forming support mode 26 (with predetermined, e.g. fixed, power output during steady state). Then, when the microgrid has stabilized again, e.g. been reconnected to the power grid 4 by the switch 5 being in its closed position, the control arrangement may switch back from the grid forming support mode (voltage control) 26 to the grid following mode (power/current control) 25. In accordance with the present invention, at least a first of the DGs 2, e.g. the energy storage 2a, may be controlled by means of an outer power control loop allowing the first DG to have a predetermined power output also in grid forming mode.

Figure 2b schematically illustrates an embodiment of a control arrangement 20 of the present disclosure. The control arrangement 20 comprises processor circuitry 21 e.g. a central processing unit (CPU). The processor circuitry 21 may comprise one or a plurality of processing units in the form of microprocessor(s). However, other suitable devices with computing capabilities could be comprised in the processor circuitry 21, e.g. an application specific integrated circuit (ASIC), a field programmable gate array (FPGA) or a complex programmable logic device (CPLD). The processor circuitry 21 is configured to run one or several computer program(s) or software (SW) 23 stored in a data storage 22 of one or several storage unit(s) e.g. a memory. The storage unit is regarded as a computer readable means as discussed herein and may e.g. be in the form of a Random Access Memory (RAM), a Flash memory or other solid state memory, or a hard disk, or be a combination thereof. The processor circuitry 21 may also be configured to store data in the storage 22, as needed. The control arrangement 20 also comprises a control interface e.g. for sending control signals to DGs 2 or converters 7 of the microgrid arrangement 1 as well as for receiving sensor signals from sensors measuring voltages and/or currents and the like in the microgrid 6.

A control implementation for the proposed method is shown in Figure 3. The grid following mode 25 may be based on measured grid voltage and frequency to achieve set point (power/current reference) tracking of power. The grid forming may be done from generation of voltage and frequency references and modulating them to achieve the same power output as in grid following mode 25.

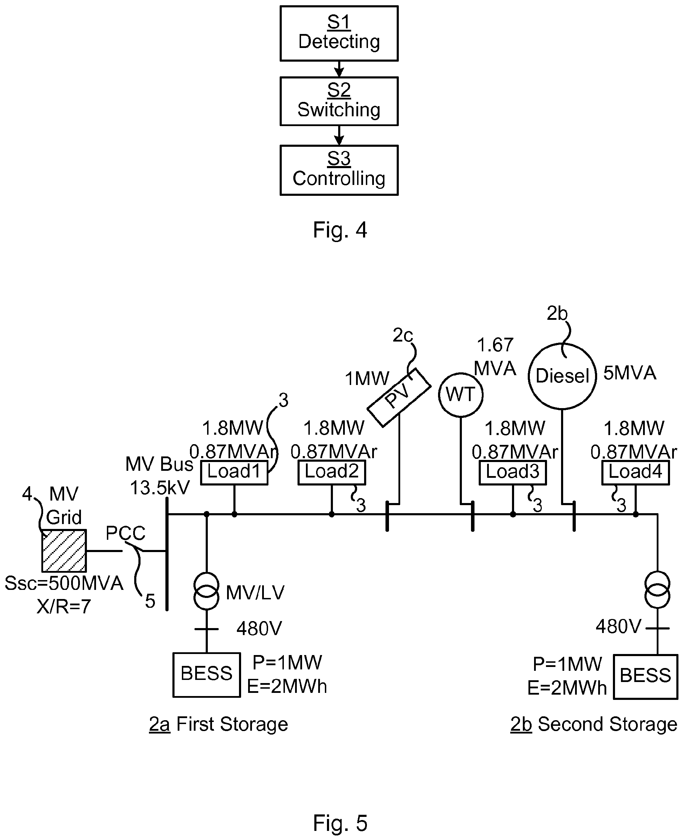

Figure 4 is a schematic flow chart of an embodiment of the method of the present invention. The method is for controlling a microgrid arrangement 1 comprising a microgrid 6, a plurality of DGs 2 connected to the microgrid, and a switch 5 for, in a closed position, connecting the microgrid 6 to a power grid 4, and for, in an open position, disconnecting the microgrid from said power grid. Instability, e.g. islanding, in the microgrid 6 is detected S1. Then, in response to the detection Si, the operating mode of a first DG 2a of the plurality of DGs 2 is switched S2 from a grid following mode 25 to a grid forming support mode 26. Also, a second DG 2b of the plurality of DGs 2 is switched S2 to a grid forming mode. Then, when the first DG is in the grid forming support mode 26, output to the microgrid 6 from the first DG is controlled S3 based on a first voltage reference during a transient state of the microgrid and based on a power reference (e.g. a power set point) during a steady state of the microgrid. Also, the output to the microgrid 6 from the second DG 2b is controlled S₃ based on a second voltage reference during both the transient state and the steady state. Thus, when the first DG is controlled in grid forming support mode, the first DG may when needed, e.g. during different transient states such as directly after islanding, contribute to control the voltage of the microgrid, but may then, when the situation has stabilized but still in grid forming support mode at a steady state, operate with a predetermined power output to the microgrid. If another transient state occurs, the first DG may once again, if needed, control the voltage until steady state is once again achieved.

In some embodiments, the controlling S₃ of the output to the microgrid 6 from the first DG 2a based on the power reference is for controlling the power output of the first DG to a predetermined constant value (e.g. a set point as mentioned herein).

In some embodiments, the power reference is the same as a power reference used in the grid following mode 25. Thus, the first DG may be controlled to output the same amount of power to the microgrid during grid forming support mode 26 as during grid following mode 25 (while still being able to contribute to voltage control when needed during a transient state).

In some embodiments, an outer control loop is used for controlling S₃ the output to the microgrid 6 from the first DG 2a in grid forming support mode 26 based on the power reference. The outer control loop may e.g. track the outputted power in relation to a power reference in the form of a power set point.

In some embodiments, the detecting S1 comprises detecting that the switch 5 is in the open position, islanding the microgrid arrangement 1. There may e.g. be a sensor at the switch 5 which signals the control arrangement 20 when the switch opens.

As mentioned above, the controlling S₃ comprises controlling output to the microgrid 6 from a second DG 2b (e.g. a diesel generator) of the plurality of DGs 2 based on a second voltage reference, concurrently with the controlling S₃ of the output to the microgrid 6 from the first DG 2a based on the power reference. Thus, there may be a plurality of DGs 2 which are controlled in a grid forming mode or grid forming support mode 26, of which a second DG is always controlling the voltage in the microgrid (regardless of whether there is a transient or steady state) while the first DG 2a is assisting in the voltage control only at a transient state of the microgrid. In some embodiments, the first and second voltage references are identical, implying that voltage reference is the same for all DGs controlling the voltage and frequency of the microgrid (however, the first DG 2a may disregard this voltage reference when the microgrid is at a steady state).

In some embodiments, the method is performed by a control arrangement 20 of the microgrid arrangement 1.

In some embodiments, the first DG 2a is an energy storage e.g. comprising a battery.

Figure 5 schematically illustrates a microgrid set-up used for simulation of embodiments of the present invention. The test system that was modelled in MATLAB/Simulink. The microgrid has one MV feeder at 13.5 kV. It has several loads 3 as well as a synchronous (diesel) generator 2b in MV, one PV generator 2c, one wind turbine (WT) generator 2e and two BESS 2a and 2b. MV stands for Medium Voltage and LV for Low Voltage.

The simulations investigated the behaviour of the microgrid 6 after islanding caused by the opening of the PCC circuit breaker 5 at time t=2.09 seconds.

An aim was to show the impact of grid forming participation of the storage unit 2a along with the diesel generator 2b (operating in grid forming mode during islanded operation) to improve microgrid stability. It is shown that the stability improves with more participation and it is possible to achieve that without changing the power output of the storage 2a.

Test cases are created to show how participation in grid formation of one storage 2a or both storages 2a and 2d improve the microgrid stability compared to the case where no storage (only the diesel generator 2b) participates in the grid formation.

The power output (which remains same as in grid following mode 25) and terminal voltage were studied for the cases to verify the control concept of grid formation without changing power output.

Frequency responses at the storage terminals are compared and it was found that the grid stability is improved with the storage participation in grid formation, even within the available fixed power output.

It was seen that energy storage 2a and/or 2d participation, even with fixed power output in accordance with the present invention, improves the microgrid frequency with smaller overshot and quicker settling.

Embodiments of the present invention may be conveniently implemented in the control arrangement 20 using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product (e.g. the storage 22 or an external data storage) which is a non-transitory storage medium or computer readable medium (media) having instructions (e.g. SW 23) stored thereon/in which can be used to program a computer to perform any of the methods/processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method of controlling a microgrid arrangement (1) comprising a microgrid (6), a plurality of Distributed Generators, DGs, (2) connected to the microgrid, and a switch (5) for, in a closed position, connecting the microgrid (6) to a power grid (4), and for, in an open position, disconnecting the microgrid from said power grid, the method comprising:
detecting (S1) instability in the microgrid, comprising detecting that the switch (5) is in the open position, islanding the microgrid arrangement (1); and
in response to the detection (Si), switching (S2) operating mode of a first DG (2a) of the plurality of DGs (2) from a grid following mode (25) to a grid forming support mode (26) and of a second DG (2b) of the plurality of DGs to a grid forming mode, keeping the first DG in the grid forming support mode and the second DG in the grid forming mode as long as the microgrid arrangement is islanded; **characterised in**
when the microgrid arrangement is islanded, controlling (S₃) output to the microgrid (6) from the first DG based on a first voltage reference during a transient state of the microgrid directly after the islanding, aiding the second DG in controlling the voltage and frequency of the microgrid, and to a predetermined fixed power output based on a power reference while disregarding the first voltage reference when the microgrid has stabilized enough for the second DG to be able to hold the microgrid at a steady state without the aid of the first DG, and controlling output to the microgrid from the second DG (2b) based on a second voltage reference during both the transient state and the steady state.

2. The method of claim 1, wherein the controlling (S₃) of the output to the microgrid (6) from the first DG (2a) during the transient state comprises modulating the first voltage reference and a frequency reference to achieve the same power output of the first DG as in the grid following mode (25).

3. The method of claim 1 or 2, wherein the power reference is the same as a power reference used in the grid following mode (25).

4. The method of any preceding claim, wherein an outer control loop is used for controlling (S₃) the output to the microgrid (6) from the first DG (2a) in grid forming support mode (26) based on the power reference.

5. The method of any preceding claim, wherein the first and second voltage references are identical.

6. The method of any preceding claim, wherein the method is performed by a control arrangement (20) of the microgrid arrangement (1).

7. A computer program product (22) comprising computer-executable components (23) for causing a control arrangement (20) to perform the method of any one of claims 1-6 when the computer-executable components are run on processor circuitry (21) comprised in the control arrangement.

8. A microgrid arrangement (1) comprising:
a microgrid (6);
a plurality of Distributed Generators, DGs, (2) connected to the microgrid;
a switch (5) for, in a closed position, connecting the microgrid (6) to a power grid (4), and for, in an open position, disconnecting the microgrid from said power grid; and
a control arrangement (20) for controlling operation of the microgrid arrangement;
the control arrangement (20) comprising:
processor circuitry (21); and
storage (22) configured to store instructions (23) executable by said processor circuitry whereby said control arrangement is operative to:
detect instability in the microgrid (6), comprising detecting that the switch (5) is in the open position, islanding the microgrid arrangement (1); and
in response to the detection, switch operating mode of a first DG (2a) of the plurality of DGs (2) from a grid following mode (25) to a grid forming support mode (26) and of a second DG (2b) of the plurality of DGs to a grid forming mode, keeping the first DG in the grid forming support mode and the second DG in the grid forming mode as long as the microgrid arrangement is islanded; wherein the control arrangement is **characterised by** further being operative to:
when the microgrid arrangement is islanded, control the output to the microgrid (6) from the first DG based on a first voltage reference during a transient state of the microgrid directly after the islanding, aiding the second DG in controlling the voltage and frequency of the microgrid, and to a predetermined fixed power output based on a power reference while disregarding the first voltage reference when the microgrid has stabilized enough for the second DG to be able to hold the microgrid at a steady state without the aid of the first DG, and controlling output to the microgrid from the second DG (2b) based on a second voltage reference during both the transient state and the steady state.

9. The microgrid arrangement of claim 8, wherein the first DG (2a) is an energy storage e.g. comprising a battery.

## Patentansprüche

1. Verfahren zum Steuern einer Mikronetzanordnung (1), die ein Mikronetz (6), mehrere verteilte Generatoren, DG, (2), die mit dem Mikronetz verbunden sind, und einen Schalter (5) zum Verbinden des Mikronetzes (6) mit einem Leistungsversorgungsnetz (4) in einer geschlossenen Stellung und zum Trennen des Mikronetzes von dem Leistungsversorgungsnetz in einer offenen Stellung umfasst, wobei das Verfahren Folgendes umfasst:
Detektieren (S1) einer Instabilität in dem Mikronetz, das das Detektieren, dass sich der Schalter (5) in der offenen Stellung befindet, und die Inselbildung der Mikronetzanordnung (1) umfasst; und
in Reaktion auf die Detektion (S1) Wechseln (S2) der Betriebsart eines ersten DG (2a) der mehreren DG (2) von einer Netzfolgebetriebsart (25) zu einer Netzbildungs-Unterstützungsbetriebsart (26) und eines zweiten DG (2b) der mehreren DG zu einer Netzbildungsbetriebsart, Halten des ersten DG in der Netzbildungs-Unterstützungsbetriebsart und des zweiten DG in der Netzbildungsbetriebsart, solange sich die Mikronetzanordnung im Inselbetrieb befindet; **gekennzeichnet durch**
dann, wenn sich die Mikronetzanordnung im Inselbetrieb befindet, Steuern (S3) der Ausgabe von dem ersten DG an das Mikronetz (6) basierend auf einer ersten Spannungsreferenz während eines Übergangszustands des Mikronetzes direkt nach der Inselbildung, Unterstützen des zweiten DG beim Steuern der Spannung und der Frequenz des Mikronetzes und zu einer vorgegebenen festen Leistungsausgabe basierend auf einer Leistungsreferenz, während die erste Spannungsreferenz nicht beachtet wird, und dann, wenn sich das Mikronetz ausreichend stabilisiert hat, so dass der zweite DG ohne die Hilfe des ersten DG das Mikronetz in einem stationären Zustand halten kann, Steuern der Ausgabe von dem zweiten DG (2b) an das Mikronetz basierend auf einer zweiten Spannungsreferenz sowohl während des Übergangszustands als auch während des stationären Zustands.

2. Verfahren nach Anspruch 1, wobei das Steuern (S3) während des Übergangszustands der Ausgabe von dem ersten DG (2a) an das Mikronetz (6) das Modulieren der ersten Spannungsreferenz und einer Frequenzreferenz umfasst, um die gleiche Leistungsausgabe des ersten DG wie in der Netzfolgebetriebsart (25) zu erreichen.

3. Verfahren nach Anspruch 1 oder 2, wobei die Leistungsreferenz die gleiche wie eine Leistungsreferenz ist, die in der Netzfolgebetriebsart (25) verwendet wird.

4. Verfahren nach einem vorhergehenden Anspruch, wobei ein äußerer Regelkreis zum Steuern (S3) der Ausgabe von dem ersten DG (2a) an das Mikronetz (6) basierend auf der Leistungsreferenz in einer Netzbildungs-Unterstützungsbetriebsart (26) verwendet wird.

5. Verfahren nach einem vorhergehenden Anspruch, wobei die erste und die zweite Spannungsreferenz gleich sind.

6. Verfahren nach einem vorhergehenden Anspruch, wobei das Verfahren durch eine Steueranordnung (20) der Mikronetzanordnung (1) ausgeführt wird.

7. Computerprogrammprodukt (22), das computerausführbare Komponenten (23) zum Veranlassen einer Steueranordnung (20) umfasst, das Verfahren nach einem der Ansprüche 1-6 auszuführen, wenn die computerausführbaren Komponenten in einer Prozessorschaltungsanordnung (21) ausgeführt werden, die in der Steueranordnung enthalten ist.

8. Mikronetzanordnung (1), die Folgendes umfasst:
ein Mikronetz (6);
mehrere verteilte Generatoren, DG, (2), die mit dem Mikronetz verbunden sind;
einen Schalter (5) zum Verbinden des Mikronetzes (6) mit einem Leistungsversorgungsnetz (4) in einer geschlossenen Stellung und zum Trennen des Mikronetzes von dem Leistungsversorgungsnetz in einer offenen Stellung; und
eine Steueranordnung (20) zum Steuern des Betriebs der Mikronetzanordnung;
wobei die Steueranordnung (20) Folgendes umfasst:
eine Prozessorschaltungsanordnung (21); und
einen Speicher (22), der konfiguriert ist, Anweisungen (23) zu speichern, die durch die Prozessorschaltungsanordnung ausführbar sind, wodurch die Steueranordnung betreibbar ist:
eine Instabilität in dem Mikronetz zu detektieren, das das Detektieren, dass sich der Schalter (5) in der offenen Stellung befindet, und die Inselbildung der Mikronetzanordnung (1) umfasst; und
in Reaktion auf die Detektion die Betriebsart eines ersten DG (2a) der mehreren DG (2) von einer Netzfolgebetriebsart (25) zu einer Netzbildungs-Unterstützungsbetriebsart (26) und eines zweiten DG (2b) der mehreren DG zu einer Netzbildungsbetriebsart zu wechseln und den ersten DG in der Netzbildungs-Unterstützungsbetriebsart und den zweiten DG in der Netzbildungsbetriebsart zu halten, solange sich die Mikronetzanordnung im Inselbetrieb befindet; wobei die Steueranordnung **dadurch gekennzeichnet ist, dass** sie ferner betreibbar ist:
dann, wenn sich die Mikronetzanordnung im Inselbetrieb befindet, die Ausgabe von dem ersten DG an das Mikronetz (6) basierend auf einer ersten Spannungsreferenz während eines Übergangszustands des Mikronetzes direkt nach der Inselbildung zu steuern und den zweiten DG beim Steuern der Spannung und der Frequenz des Mikronetzes und zu einer vorgegebenen festen Leistungsausgabe basierend auf einer Leistungsreferenz zu unterstützen, während die erste Spannungsreferenz nicht beachtet wird, und dann, wenn sich das Mikronetz ausreichend stabilisiert hat, so dass der zweite DG ohne die Hilfe des ersten DG das Mikronetz in einem stationären Zustand halten kann, die Ausgabe von dem zweiten DG (2b) an das Mikronetz basierend auf einer zweiten Spannungsreferenz sowohl während des Übergangszustands als auch während des stationären Zustands zu steuern.

9. Mikronetzanordnung nach Anspruch 8, wobei der erste DG (2a) ein Energiespeicher ist, der z. B. eine Batterie umfasst.

## Revendications

1. Procédé de commande d'un agencement de micro-réseau (1) comprenant un micro-réseau (6), une pluralité de générateurs distribués, DG, (2) connectés au micro-réseau, et un commutateur (5) pour, dans une position fermée, connecter le micro-réseau (6) à un réseau électrique (4), et pour, dans une position ouverte, déconnecter le micro-réseau dudit réseau électrique, le procédé comprenant les étapes suivantes :
détecter (S1) une instabilité dans le micro-réseau, comprenant la détection du fait que le commutateur (5) est dans la position ouverte, l'îlotage du dispositif de micro-réseau (1) ; et
en réponse à la détection (S1) , commuter (S2) le mode de fonctionnement d'un premier DG (2a) de la pluralité de DG (2) d'un mode de suivi de réseau (25) à un mode de support de formation de réseau (26) et d'un second DG (2b) de la pluralité de DG à un mode de formation de réseau, en maintenant le premier DG dans le mode de support de formation de réseau et le second DG dans le mode de formation de réseau tant que l'agencement de micro-réseau est îloté ; **caractérisé en ce que** :
lorsque l'agencement de micro-réseau est îloté, commander (S3) la sortie vers le micro-réseau (6) depuis le premier DG sur la base d'une première référence de tension pendant un état transitoire du micro-réseau directement après l'îlotage, en aidant le second DG à commander la tension et la fréquence du micro-réseau, et à une sortie de puissance fixe prédéterminée basée sur une référence de puissance tout en ignorant la première référence de tension lorsque le micro-réseau s'est suffisamment stabilisé pour que le second DG soit capable de maintenir le micro-réseau dans un état stable sans l'aide du premier DG, et commander la sortie vers le micro-réseau du second DG (2b) sur la base d'une seconde référence de tension à la fois pendant l'état transitoire et l'état stable.

2. Procédé selon la revendication 1, dans lequel la commande (S3) de la sortie vers le micro-réseau (6) depuis le premier DG (2a) pendant l'état transitoire comprend la modulation de la première référence de tension et d'une référence de fréquence pour obtenir la même sortie de puissance du premier DG que dans le mode de suivi de réseau (25) .

3. Procédé selon la revendication 1 ou la revendication 2, dans lequel la référence de puissance est la même qu'une référence de puissance utilisée dans le mode de suivi de réseau (25).

4. Procédé selon l'une quelconque des revendications précédentes, dans lequel une boucle de commande externe est utilisée pour commander (S3) la sortie vers le micro-réseau (6) depuis le premier DG (2a) en mode de support de formation de réseau (26) sur la base de la référence de puissance.

5. Procédé selon l'une quelconque des revendications précédentes, dans lequel les première et seconde références de tension sont identiques.

6. Procédé selon l'une quelconque des revendications précédentes, dans lequel le procédé est exécuté par un agencement de commande (20) de l'agencement de micro-réseau (1).

7. Produit programme informatique (22) comprenant des composants exécutables par ordinateur (23) pour amener un agencement de commande (20) à exécuter le procédé de l'une quelconque des revendications 1 à 6 lorsque les composants exécutables par ordinateur sont exécutés sur des circuits de processeur (21) compris dans l'agencement de commande.

8. Agencement de micro-réseau (1) comprenant :
un micro-réseau (6) ;
une pluralité de générateurs distribués, DG, (2) connectés au micro-réseau ;
un commutateur (5) pour, dans une position fermée, connecter le micro-réseau (6) à un réseau électrique (4), et pour, dans une position ouverte, déconnecter le micro-réseau dudit réseau électrique ; et
un dispositif de commande (20) pour commander le fonctionnement du dispositif de micro-réseau ;
l'agencement de commande (20) comprenant :
des circuits de processeur (21) ; et
une mémoire (22) configurée pour stocker des instructions (23) exécutables par lesdits circuits de processeur, moyennant quoi ledit agencement de commande est opérationnel pour :
détecter une instabilité dans le micro-réseau (6), comprenant la détection du fait que le commutateur (5) est en position ouverte, l'îlotage du dispositif de micro-réseau (1) ; et
en réponse à la détection, commuter le mode de fonctionnement d'un premier DG (2a) de la pluralité de DG (2) d'un mode de suivi de réseau (25) à un mode de support de formation de réseau (26) et d'un second DG (2b) de la pluralité de DG à un mode de formation de réseau, en maintenant le premier DG dans le mode de support de formation de réseau et le second DG dans le mode de formation de réseau tant que l'agencement de micro-réseau est îloté ; où l'agencement de commande est **caractérisé en ce qu'**il est en outre opérationnel pour :
lorsque l'agencement de micro-réseau est îloté, commander la sortie vers le micro-réseau (6) depuis le premier DG sur la base d'une première référence de tension pendant un état transitoire du micro-réseau directement après l'îlotage, en aidant le second DG à commander la tension et la fréquence du micro-réseau, et à une sortie de puissance fixe prédéterminée basée sur une référence de puissance tout en ignorant la première référence de tension lorsque le micro-réseau s'est suffisamment stabilisé pour que le second DG soit capable de maintenir le micro-réseau dans un état stable sans l'aide du premier DG, et commander la sortie vers le micro-réseau du second DG (2b) sur la base d'une seconde référence de tension à la fois pendant l'état transitoire et l'état stable.

9. Agencement de micro-réseau selon la revendication 8, dans lequel le premier DG (2a) est un stockage d'énergie, par exemple comprenant une batterie.
